# EUROPEAN PATENT APPLICATION

(11) **EP 4 310 705 A1**
(43) Date of publication of application: **24.01.2024**
(21) Application number: 22770900.3
(22) Date of filing: 01.02.2022
(51) Int. Cl.: G06F 21/35, G06F 21/32, G06F 21/44, G06F 21/62

(54) **SECURITY DEVICE, INFORMATION MANAGEMENT SYSTEM, AND INFORMATION MANAGEMENT PROGRAM**

(30) Priority: 18.03.2021 JP 2021044579; 18.03.2021 JP 2021044587
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: MISAWA, Yuto, Kawasaki-shi, Kanagawa 212-0013 (JP); UNO, Mizuki, Kawasaki-shi, Kanagawa 212-0013 (JP)
(74) Representative: Horn Kleimann Waitzhofer Schmid-Dreyer Patent- und Rechtsanwälte PartG mbB
(86) International application number: PCT/JP2022/003742
(87) International publication number: WO 2022/196138

(57) **Abstract**

According to an embodiment, a security device includes an interface, a secure memory, and a processor. The interface communicates with a mobile terminal including a function of disclosing information. The secure memory stores information to be used for authentication. The processor receives an authentication request associated with an instruction to disclose information to be subjected to security management in the mobile terminal by the interface, specifies an authentication process to be executed by using information stored in the secure memory in accordance with content of the authentication request, and notifies the mobile terminal of an authentication result of execution of the specified authentication process.

## Description

### FIELD

Embodiments described herein relate generally to a security device, an information management system, and an information management program.

### BACKGROUND

In recent years, mobile terminals such as smartphones, tablet PCs, and mobile phones hold information that requires security measures, such as personal information. For example, in recent years, efforts have been made to provide a mobile device such as a smartphone with an identification function including a driver's license.

As an example, there is a mobile driver's license using a mobile terminal such as a smartphone as a driver's license. The mobile driver's license is provided as an application program used as a driver's license executable by the mobile terminal. The mobile driver's license installed in the mobile terminal needs to securely manage information of the license including personal information. However, there is a problem that security measures are limited only with mobile terminals.

### CITATION LIST

### PATENT LITERATURE

Patent Literature 1: Jpn. Pat. Appln. KOKAI Publication No. 2019-047325

### SUMMARY

### TECHNICAL PROBLEM

In order to solve the above problems, an object of the present invention is to provide a security device, an information management system, and an information management program capable of securely managing information.

### SOLUTION TO PROBLEM

According to an embodiment, a security device includes an interface, a secure memory, and a processor. The interface communicates with a mobile terminal including a function of disclosing information. The secure memory stores information to be used for authentication. The processor receives an authentication request associated with an instruction to disclose information to be subjected to security management in the mobile terminal by the interface, specifies an authentication process to be executed by using information stored in the secure memory in accordance with content of the authentication request, and notifies the mobile terminal of an authentication result of execution of the specified authentication process.

### BRIEF DESCRIPTION OF THE DRAWINGS

FIG. 1 is a diagram schematically illustrating a configuration example of an information management system including a smartwatch as a security device according to a first embodiment.
FIG. 2 is a block diagram illustrating a configuration example of a security device according to the first embodiment.
FIG. 3 is a block diagram illustrating a configuration example of a mobile terminal in the information management system according to the first embodiment.
FIG. 4 is a block diagram illustrating a configuration example of a server in the information management system according to the first embodiment.
FIG. 5 is a flowchart for explaining an operation example of the mobile terminal in the information management system according to the first embodiment.
FIG. 6 is a flowchart for explaining an operation example of the security device in the information management system according to the first embodiment.
FIG. 7 is a flowchart for explaining an unlock process of an authentication state in the security device of the information management system according to the first embodiment.
FIG. 8 is a diagram schematically illustrating a configuration example of a device that implements an information management system according to a second embodiment.
FIG. 9 is a block diagram illustrating a configuration example of a security device in the information management system according to the second embodiment.
FIG. 10 is a block diagram illustrating a configuration example of a mobile terminal in the information management system according to the second embodiment.
FIG. 11 is a block diagram illustrating a configuration example of a server in the information management system according to the second embodiment.
FIG. 12 is a flowchart for explaining an operation example of storage setting by the mobile terminal in the information management system according to the second embodiment.
FIG. 13 is a flowchart for explaining an operation example of display process of license information by the mobile terminal in the information management system according to the second embodiment.
FIG. 14 is a flowchart for explaining an operation example of the server in the information management system according to the second embodiment.

### DETAILED DESCRIPTION

Hereinafter, first and second embodiments will be described with reference to the drawings.

### (First Embodiment)

First, an information management system 1 including a security device according to the first embodiment will be described.

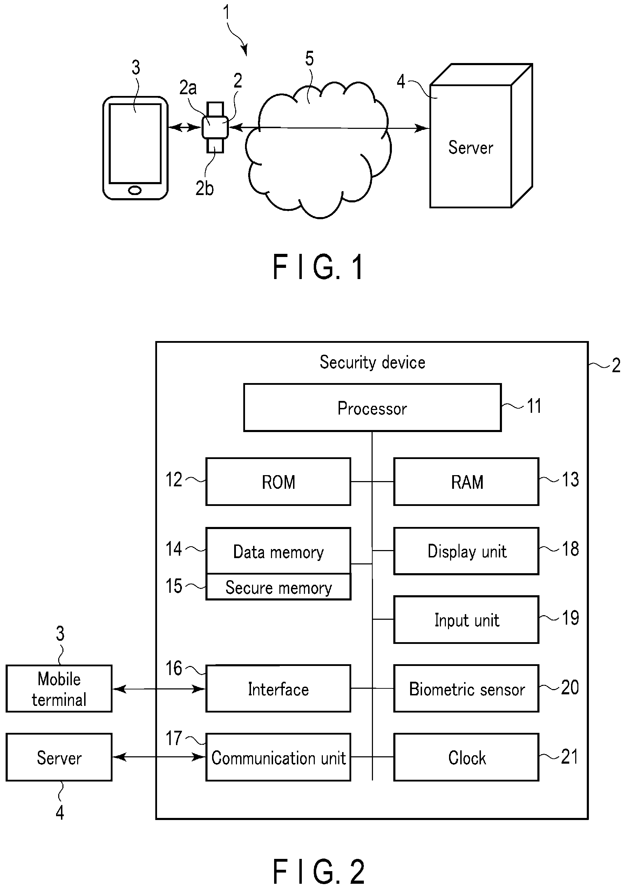

FIG. 1 is a diagram schematically illustrating a configuration example of the information management system 1 including a security device according to the first embodiment.

In the configuration example illustrated in FIG. 1, the information management system 1 includes a security device 2, a mobile terminal 3, and a server 4. The security device 2 and the server 4 are communicatively connected via a network 5 such as the Internet.

The security device 2 is an electronic device held by a user. The security device 2 is, for example, a wearable device such as a smartwatch. The security device 2 includes a communication interface that communicates with the mobile terminal 3, a communication interface that communicates with the server 4, a biometric sensor (fingerprint sensor, vein sensor, camera, etc.), a secure memory, an internal clock (clock), and the like.

In addition, as illustrated in FIG. 1, the wearable device as the security device 2 includes a main body 2a including each unit and an attachment portion 2b for the user to hold (attach) the main body 2a. For example, the smartwatch as the security device 2 includes a belt as the attachment portion 2b for the user to attach the main body 2a.

In the first embodiment, it is assumed that the security device 2 is mainly a smartwatch having a function of performing biometric authentication using a fingerprint as biometric information. However, the security device 2 according to the first embodiment is not limited to the smartwatch, and may be any device that the user possesses together with the mobile terminal 3. In addition, the security device 2 according to the first embodiment is not limited to the one that performs fingerprint (biometric) authentication by fingerprint as biometric information.

The mobile terminal 3 is an information processing device carried by the user. The mobile terminal 3 is, for example, a smartphone, a mobile phone, a tablet PC, or the like. The mobile terminal 3 is loaded with an application program (hereinafter, also referred to as an app.) for displaying various types of information such as certificate information including personal information indicated by an identification card. In the first embodiment, the mobile terminal 3 is loaded with an app. for realizing a mobile driver's license (hereinafter, also referred to as an mDL.) that can be used as a driver's license. The mobile terminal 3 is operated by the user himself or herself, and displays various types of information certified by a driver's license as an mDL.

The mobile terminal 3 has a function of communicating with the security device 2 and a function of communicating with the server 4 via the network 5. In addition, the mobile terminal 3 includes a biometric sensor (fingerprint sensor, vein sensor, camera, etc.), and also has a function of performing biometric authentication based on biometric information captured by the biometric sensor.

The server 4 has a function of communicating with the security device 2 and the mobile terminal 3. The server 4 includes a database that stores identification information of the security device 2 and information necessary for online authentication. The information necessary for the online authentication is information that can verify the secret information held in the security device 2 (for example, a public key corresponding to a secret key held by the security device 2) .

Next, a configuration of the security device 2 in the information management system 1 according to the first embodiment will be described.

FIG. 2 is a block diagram illustrating a configuration example of a control system in the security device 2 according to the first embodiment.

In the configuration example illustrated in FIG. 2, the security device 2 includes a processor 11, a ROM 12, a RAM 13, a data memory 14, a secure memory 15, an interface (I/F) 16, a communication unit 17, a display unit 18, an input unit 19, a biometric sensor 20, a clock 21, and the like.

Note that the wearable device as the security device 2 includes the main body 2a including the configuration illustrated in FIG. 2 and the attachment portion 2b to be attached by the user. For example, the smartwatch as the security device 2 includes the main body 2a having the configuration illustrated in FIG. 2, a belt as the attachment portion 2b to be attached to an arm or the like by the user, and the like.

The processor 11 includes a circuit that executes various processes. The processor 11 is, for example, a central processing unit (CPU). The processor 11 controls the entire security device 2. The processor 11 implements various processing functions by executing programs stored in the ROM 12 or the data memory 14. However, some or all of various functions executed by the processor 11 described later may be implemented by a hardware circuit.

The ROM 12 is a non-volatile memory that functions as a program memory. The ROM 12 stores a control program, control data, and the like in advance. The ROM 12 is incorporated in the housing of the security device 2 in a state where the control program, the control data, and the like are stored at the manufacturing stage. The control program and the control data stored in the ROM 12 are incorporated in advance in accordance with the specification of the security device 2 or the like.

The RAM 13 is a volatile memory that functions as a working memory. The RAM 13 also functions as a buffer that temporarily stores data and the like being processed by the processor 11. For example, the RAM 13 functions as a communication buffer that temporarily stores data to be transmitted to and received from the server 4 via the communication unit 17.

The data memory 14 is a non-volatile memory capable of writing and rewriting data. The data memory 14 includes, for example, an Electrically Erasable Programmable Read Only Memory (EEPROM (registered trademark)) and the like. In the data memory 14, programs and various data corresponding to the operation application of the security device 2 are written. In a data memory 24, a program file, a data file, or the like is defined, and a control program and various data are written in these files.

The secure memory 15 is a memory having tamper resistance capable of securely storing data. The secure memory 15 stores information for the security device 2 to perform an authentication process. For example, the secure memory 15 stores a secret key as secret information used for online authentication using the server 4 described later.

In addition, the secure memory 15 stores authentication information for authenticating a user who is the owner (registrant) of the security device 2. The authentication information stored in the secure memory 15 stores various types of authentication information corresponding to an authentication process method included in the security device 2. Examples of the authentication information include biometric information used for biometric authentication and a personal identification number (PIN) used for authentication using a personal identification number. Furthermore, as the biometric information, the biometric information of the registrant corresponding to the biometric information acquired by the biometric sensor 20 included in the security device 2 is stored. For example, in a case where the security device 2 has a function of performing fingerprint authentication as biometric authentication, the secure memory 15 stores fingerprint information as biometric information of the registrant.

The interface 16 is an interface for communication connection with the mobile terminal 3. It is sufficient that the interface 16 is able to establish communication connection with the mobile terminal 3 while the user holds the security device 2 (for example, in a state of being worn on an arm) and is, for example, an interface that performs wireless communication such as Bluetooth (registered trademark).

The communication unit 17 is a communication interface for communicating with an external device. It is sufficient that the communication unit 17 communicates with the server 4 via the network 5. The communication unit 17 may communicate via a mobile phone communication network such as 3G, LTE (registered trademark), or 5G, or may communicate with the server 4 via a wireless LAN such as Wi-Fi.

The display unit 18 is a display device such as a liquid crystal panel. The input unit 19 is an operation device that inputs an operation instruction to the mobile terminal 3. The input unit 19 includes, for example, a touch panel. The display unit 18 and the input unit 19 may be configured by a display device with a touch panel (hereinafter, referred to as a touch screen.). Furthermore, the input unit 19 may include an operation key including a button switch, a touch sensor that detects a touch of the operator's finger based on a change in capacitance, and the like.

The biometric sensor 20 is a sensor that acquires biometric information of a person as authentication information used for a biometric authentication process. The biometric sensor 20 is, for example, a fingerprint sensor, a vein sensor, a camera, or the like. The fingerprint sensor as the biometric sensor 20 reads the user's fingerprint, and may be realized by, for example, a touch panel provided on the display unit 18. The vein sensor as the biometric sensor 20 reads the vein pattern at the attachment portion site in a state where the smartwatch to be as the security device 2 is attached to the arm. Furthermore, the camera as the biometric sensor 20 acquires biometric information that can be optically captured, such as a face image used for face authentication or an iris used for iris authentication.

The clock 21 measures a date and time. The clock 21 is an internal clock of the security device 2, and can independently measure a date and time. However, the internal clock of the clock 21 may be corrected (set) based on date and time information from an external device connected via the network 5 by the communication unit 17 or the mobile terminal 3 connected via the interface 16.

Next, a configuration of the mobile terminal 3 in the information management system 1 according to the first embodiment will be described.

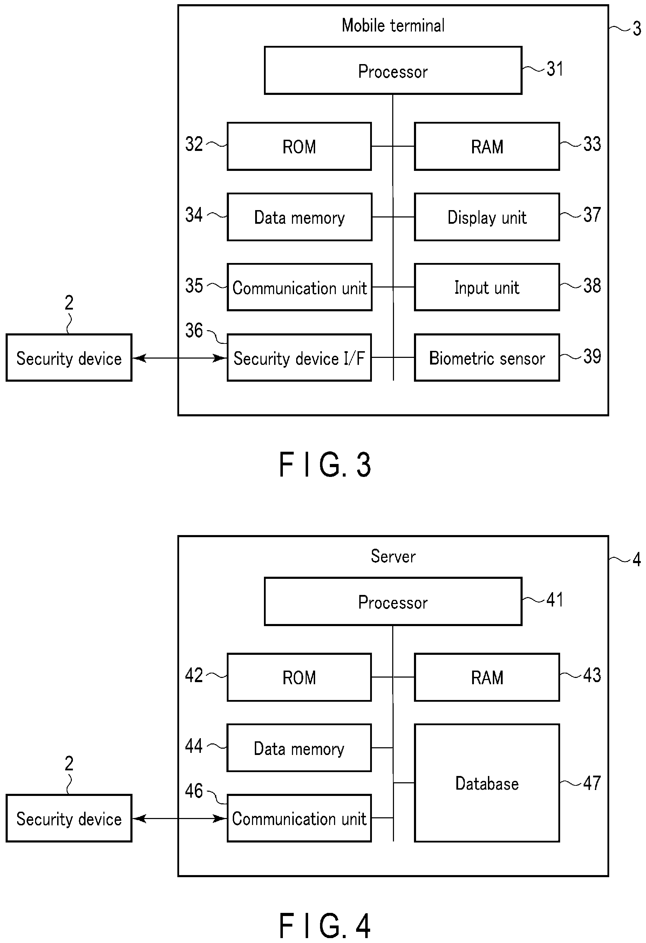

FIG. 3 is a block diagram illustrating a configuration example of the mobile terminal 3 in the information management system 1 according to the first embodiment.

In the configuration example illustrated in FIG. 3, the mobile terminal 3 includes a processor 31, a ROM 32, a RAM 33, a data memory 34, a communication unit 35, a card reader/writer (RW) 36, a display unit 37, an input unit 38, and the like.

The processor 31 executes various processes by executing a program. The processor 31 is, for example, a central processing unit (CPU). The processor 31 is connected to each unit in the mobile terminal 3 via a system bus, and transmits and receives data to and from each unit. The processor 31 executes operations such as control and data processing in the mobile terminal 3 in cooperation with the ROM 32 and the RAM 33. For example, the processor 31 implements various processing functions by executing application programs stored in the ROM 32 or the data memory 34. However, some or all of various functions executed by the processor 31 described later may be implemented by a hardware circuit.

The read only memory (ROM) 32 is a non-volatile memory that stores programs and control data for realizing basic operations of the mobile terminal 3. For example, the ROM 32 stores a program that manages basic operations such as an operating system (OS). In addition, the ROM 32 may store an application program or the like for realizing the function included in the mobile terminal 3. The ROM 32 may be configured by a rewritable non-volatile memory. For example, the rewritable ROM 32 is realized by an electrically erasable programmable ROM (EEPROM), a flash ROM, or the like.

A random access memory (RAM) 33 is a volatile memory that temporarily stores data. The RAM 33 functions as a working memory when the processor 31 executes a program.

The data memory 34 is a storage unit that stores various data. The data memory 34 is configured by a non-volatile memory capable of rewriting data. For example, as the data memory 34, a semiconductor element memory such as a flash ROM or a solid state drive (SSD), or a storage device such as a hard disc drive (HDD) is used. The data memory 34 stores an application program, operation setting values, personal information, and the like. The data memory 34 may store an OS program.

The communication unit 35 is a communication interface for communicating with an external device. The communication unit 35 communicates with the server 4 via an interface. The communication unit 35 may communicate via a mobile phone communication network (mobile communication) such as 3G, LTE, or 5G, or may communicate with the server 4 via a wireless LAN such as Wi-Fi.

The security device interface (I/F) 36 is an interface for communication connection with the security device 2. It is sufficient that the security device interface 36 is able to communicatively connect to the security device 2 in a state being held by the user, and is, for example, an interface that performs wireless communication such as Bluetooth.

The display unit 37 is a display device such as a liquid crystal panel. The input unit 38 is an operation device that inputs an operation instruction to the mobile terminal 3. The input unit 38 includes, for example, a touch panel. The display unit 37 and the input unit 38 may be configured by a display device with a touch panel (hereinafter, referred to as a touch screen.). Furthermore, the input unit 38 may include an operation key including a button switch, a touch sensor that detects a touch of the operator's finger based on a change in capacitance, and the like.

The biometric sensor 39 is a sensor that acquires biometric information of a person as authentication information used for a biometric authentication process. The biometric sensor 39 is, for example, a fingerprint sensor, a vein sensor, a camera, or the like. The biometric sensor 39 may be the same as or different from the biometric sensor 20 included in the security device 2. Further, the mobile terminal 3 may include a plurality of types of biometric sensors.

Next, a configuration of the server 4 in the information management system 1 according to the first embodiment will be described.

FIG. 4 is a block diagram illustrating a configuration example of the server 4 in the information management system 1 according to the first embodiment.

As illustrated in FIG. 4, the server 4 includes a processor 41, a ROM 42, a RAM 43, a data memory 44, an interface 45, a communication unit 46, and a database 47.

The processor 41 executes various processes by executing a program. The processor 41 is, for example, a central processing unit (CPU). The processor 41 is connected to each unit in the server 4 via a system bus, and transmits and receives data to and from each unit. The processor 41 executes operations such as control and data processing in the server 4 in cooperation with the ROM 42 and the RAM 43.

The read only memory (ROM) 42 is a non-volatile memory that stores programs and control data for realizing basic operations of the server 4.

A random access memory (RAM) 43 is a volatile memory that temporarily stores data. The RAM 43 functions as a working memory when the processor 41 executes a program.

The data memory 44 is a storage unit that stores various data. The data memory 44 is configured by a non-volatile memory capable of rewriting data. For example, the data memory 44 stores an OS program, an application program, operation setting information, and the like.

The communication unit 46 is a communication interface for communicating with an external device. The communication unit 46 may perform wireless communication or may perform wired communication. In the first embodiment, it is sufficient that the communication unit 46 communicates with the security device 2 and the mobile terminal 3 held by the user via a wide area network such as the Internet.

The database 47 is a memory that stores data for performing online authentication with the security device 2. The database 47 stores, for example, identification information (ID) of the security device 2 and information that can verify the secret information of the security device(for example, a public key corresponding to a secret key, or the like) as information necessary for online authentication in association with each other .

Next, an operation example for the mobile terminal 3 to use information of a mobile driver's license in the information management system 1 according to the first embodiment will be described.

First, an operation example of the mobile terminal 3 in the information management system 1 according to the first embodiment will be described.

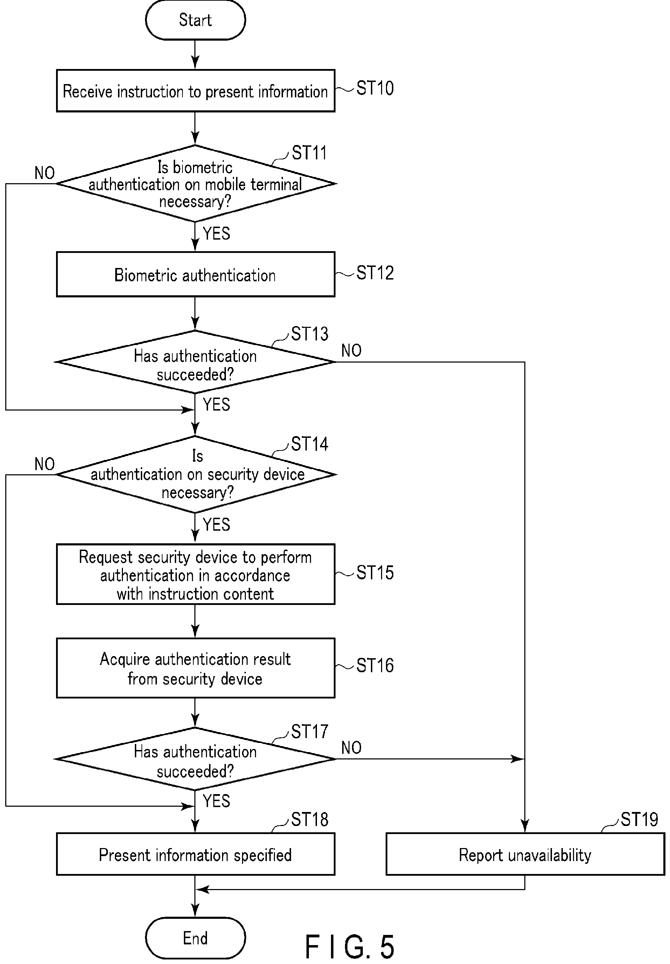

FIG. 5 is a flowchart for explaining an operation example of the mobile terminal in the information management system according to the first embodiment.

First, the user activates the mDL in the mobile terminal 3, and then inputs an instruction to indicate information requested to be disclosed using the input unit 38. The processor 31 of the mobile terminal 3 receives an operation instruction to specify the information requested to be disclosed that the user input using the input unit 38 (ST10) . For example, the user instructs information of the mDL (license card information) to be displayed on the display unit 37 of the mobile terminal 3 through the input unit 38. Here, it is assumed that the user instructs a use purpose or information or the like that needs to be displayed in accordance with the use purpose.

If the instruction to use the mDL is input, the processor 31 determines whether biometric authentication on the mobile terminal 3 is necessary in accordance with the instruction content (ST11). For example, it is assumed that the data memory 34 stores setting information indicating process contents such as authentication to be performed in accordance with the instruction content specified by the user. Based on the setting information stored in the data memory 34, the processor 31 determines whether or not biometric authentication on the mobile terminal 3 is necessary in accordance with the instruction content specified by the user.

When determining that biometric authentication on the mobile terminal 3 is necessary (ST11, YES), the processor 31 executes the biometric authentication on the mobile terminal 3 (ST12). As the biometric authentication on the mobile terminal 3, the processor 31 acquires the biometric sensor 39, and performs the biometric authentication by collating the biometric information acquired by the biometric sensor 39 with the biometric information of the user as the registrant stored in the data memory 34. The biometric authentication on the mobile terminal 3 in ST12 may be replaced with user authentication other than the biometric authentication. For example, the biometric authentication on the mobile terminal 3 may be replaced with user authentication using a personal identification number.

If the biometric authentication on mobile terminal 3 succeeds (ST13, YES), the processor 31 proceeds to ST14. In addition, when determining that biometric authentication on the mobile terminal 3 is unnecessary (ST11, NO), the processor 31 skips the biometric authentication on the mobile terminal 3, and proceeds to ST14.

In ST14, the processor 31 determines whether or not authentication on the security device 2 is necessary in accordance with the instruction content (ST14). Based on the setting information stored in the data memory 34, the processor 31 determines whether or not authentication on the security device 2 is necessary in accordance with the instruction content specified by the user.

When determining that the authentication on the security device 2 is unnecessary (ST14, NO), the processor 31 presents the information of the mDL in accordance with the content specified by the user (ST18). For example, if the user instructs to display a part of the license card information, the processor 31 reads the information specified by the user by the mDL and displays the read information on the display unit 37.

When determining that authentication on the security device 2 is necessary (ST14, YES), the processor 31 requests the security device 2 to perform an authentication process that needs to be performed on the security device 2 in accordance with the instruction content specified by the user (ST15). The processor 31 transmits an authentication request to the security device 2 that is communicatively connected via the security device interface 36.

For example, the processor 31 may notify the security device 2 of a security level (authentication level) requesting the security device 2 as information indicating the content of the authentication process to be executed on the security device 2. In addition, the processor 31 determines specific content of the authentication process to be executed on the security device 2, and notifies the security device 2 of the content of the authentication process to be executed together with the authentication request. In addition, the processor 31 may notify the security device 2 of the instruction content specified by the user to cause the security device 2 to determine the content of the authentication process to be executed.

After transmitting the authentication request to the security device 2, the processor 31 waits to receive an authentication result from the security device 2 (ST16). If the authentication result is acquired from the security device 2, the processor 31 determines whether or not the authentication process on the security device 2 in accordance with the instruction content succeeds (ST17).

When the authentication on the security device 2 succeeds (ST17, YES), the processor 31 presents the information of the mDL in accordance with the content specified by the user (ST18). For example, the processor 31 reads out the license card information requested to be displayed by the user by the mDL and displays the license card information on the display unit 37.

If the authentication on the security device 2 fails (ST17, NO) or if the biometric authentication on the mobile terminal 3 fails (ST17, NO), the processor 31 reports unavailability of the mDL (ST19). For example, the processor 31 displays, on the display unit 37, a warning that the mDL cannot be used because the biometric authentication specified on the display unit 37 has failed.

According to the process as described above, the information processing system according to the first embodiment executes the authentication process to be performed on the mobile terminal and the security device in accordance with the instruction content the user requests to present on the mobile terminal, and presents the information of the content instructed by the user when the authentication on the mobile terminal and the security device succeeds.

As a result, according to the information processing system of the first embodiment, it is possible to present information held by the mobile terminal on the premise of authentication using not only the mobile terminal but also the security device cooperating with the mobile terminal. As a result, the information processing system according to the first embodiment can realize strong information security even for information that can be presented by an identification card function realized by a mobile terminal such as a highly convenient mDL.

Next, an operation of the security device 2 in the information management system 1 according to the first embodiment will be described.

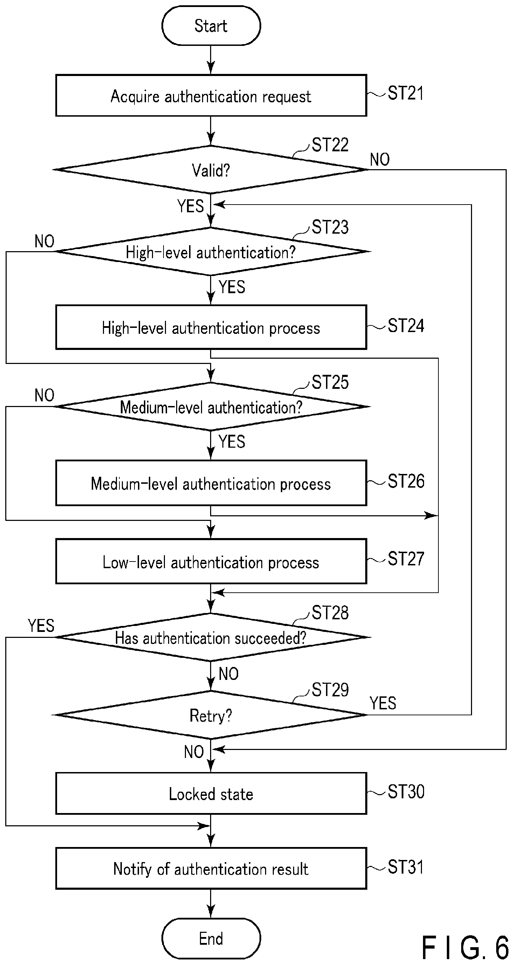

FIG. 6 is a flowchart for explaining an operation example of the security device in the information management system according to the first embodiment.

It is assumed that the processor 11 of the security device 2 operates in a state of being communicatively connected to the mobile terminal 3 via the interface 16. In this state, the processor 11 acquires an authentication request associated with disclosure of information from the mobile terminal 3 (ST21).

When receiving the authentication request, the processor 11 determines whether or not the authentication request from the mobile terminal 3 or the app. of the mobile terminal 3 (here, assuming mDL) is valid (ST22) . For example, the security device 2 may provide an expiration date for enabling the authentication request to be accepted to the mobile terminal 3 or the mDL of the mobile terminal 3 to which the connection is set. In this case, the processor 11 executes the authentication request from the mobile terminal 3 or the mDL if it is within the expiration date, and disables execution of the authentication request from the mobile terminal 3 or the mDL if it is outside the expiration date (revocation period).

When determining that the authentication request is valid (ST22, YES), the processor 11 specifies the content of the authentication process to be executed based on the information acquired from the mobile terminal 3 together with the authentication request. Here, an operation example of performing the authentication process in accordance with the authentication levels set in three stages as illustrated in FIG. 6 will be described.

That is, when the authentication request acquired from the mobile terminal 3 is valid, the processor 11 specifies the authentication level (or the content of the authentication process) of the authentication process to be executed in accordance with the authentication request. For example, when the authentication level is specified by the mobile terminal 3, the processor 11 specifies the content of the authentication process to be executed in accordance with the authentication level specified by the mobile terminal 3. In addition, the processor 11 may acquire information indicating content requested to be presented from the mobile terminal 3 and specify the authentication level based on the acquired information. Note that content of the authentication process corresponding to each authentication level may be stored in the data memory 14 or the like.

When determining that the high-level authentication process is necessary (ST23, YES), the processor 11 executes the high-level authentication process (ST24). For example, in a case where information indicated by the mDL is necessary as a proof of an individual for performing various procedures (for example, issuance of bank cards and credit cards, and public procedures at government offices and the like), it is assumed that a high-level authentication process on the security device 2 is necessary.

The high-level authentication process is assumed to be, for example, an authentication process that requires execution of both online authentication in cooperation with the server 4 and biometric authentication. In this case, the security device 2 can provide an authentication result having high security to the mobile terminal 3 by setting success of the online authentication and the biometric authentication as a condition of the authentication success.

In addition, examples of the online authentication in cooperation with the server 4 include challenge response authentication based on public key infrastructure (PKI). As a specific example, a secret key of the public key pair is stored in the security device 2, and a public key is stored in the server 4. The security device 2 encrypts the challenge from the server 4 with the secret key and responds to the challenge. The server 4 verifies the response from the security device 2 with the corresponding public key.

In addition, the level of the authentication process (content of the authentication process) may be specified based on the date and time measured by the clock 21 as an internal clock. By specifying the level of the authentication process and the content of the authentication process using the date and time measured by the clock as the internal clock of the security device 2, the information management system 1 can control the authentication method corresponding to the lapse of time or the like only in the security device 2 without depending on an external device.

For example, the level of the authentication process may be specified in accordance with a period that has elapsed since the previous online authentication was performed (since the previous online authentication succeeded). Specifically, the security device 2 may hold the date and time when the online authentication succeeds in the data memory 14, and determine that the high-level authentication process is necessary when the elapsed time from the previous successful online authentication exceeds the predetermined reference value.

In addition, the level of the authentication process may be specified according to the number of times (alternatively, the number of times of reading the biometric information or PIN as the authentication information) of the authentication process (biometric authentication or PIN authentication) performed offline after the previous online authentication was performed (since the previous online authentication succeeded). Specifically, the security device 2 may hold the number of times of authentication processes performed offline since the online authentication succeeded in the data memory 14, and determine that the high-level authentication process is necessary when the number of authentication processes performed offline after the previous online authentication succeeded exceeds a predetermined reference value.

When determining that the security level required for the authentication process is not the high level (ST23, NO), the processor 11 determines whether or not the authentication level for the authentication process required from the mobile terminal 3 is the medium level (ST25).

When determining that the medium-level authentication process is necessary (ST25, YES), the processor 11 executes the medium-level authentication process (ST26). For example, in a case where it is necessary to present information that certifies an individual indicated by the mDL in order to confirm the individual (for example, arbitrary listening from the police, confirmation of association between a ticket and an individual, or the like), it is assumed that medium-level authentication process on the security device 2 is necessary.

The medium-level authentication process is, for example, an authentication process to be executed by offline biometric authentication on the security device 2. In this case, the security device 2 is not required to perform the online authentication in cooperation with the server 4, and sets the success of the offline biometric authentication on the security device 2 as a condition, thereby being able to provide the mobile terminal 3 with the authentication result capable of maintaining the security by the biometric authentication while securing the convenience.

When determining that the security level required for the authentication process is not the medium level (ST25, NO), the processor 11 determines that the authentication level for the authentication process required from the mobile terminal 3 is the low level. For example, as the low-level authentication process, in a case where it is necessary to present only a part of the personal information indicated by the mDL in order to confirm a part of the personal information (for example, age verification for purchasing cigarettes or alcoholic beverages), it is assumed that the security device 2 needs the low-level authentication process.

The low-level authentication process is, for example, an authentication process to be executed by offline PIN authentication on the security device 2. In this case, the security device 2 is not required to perform the online authentication in cooperation with the server 4, and the biometric authentication, and sets the success of the offline PIN authentication on the security device 2 as a condition, thereby providing the mobile terminal 3 with the authentication result capable of maintaining a certain level of security while securing the convenience.

If the authentication process at the specified level is performed in response to the authentication request, the processor 11 determines whether or not the authentication as the security device 2 succeeds (ST28).

If the authentication on the security device 2 in response to the authentication request succeeds (ST28, YES), the processor 11 notifies the mobile terminal 3 which is the authentication request source that the authentication on the security device 2 succeeds (ST31).

If the authentication on the security device 2 in response to the authentication request fails (ST28, NO), the processor 11 determines whether or not the authentication process can be retried (ST29). If the authentication process is in a state capable of being retried (ST29, YES), the processor 11 returns to ST23 and executes the authentication process described above again.

If the state capable of being retried is disabled (ST29, NO), the processor 11 sets the authentication state for the mDL of the mobile terminal 3 or the mobile terminal 3 which is the authentication request source in the security device 2 to the locked state (ST30). If the authentication state is set to the locked state, the processor 11 transmits, to the mobile terminal 3, an authentication result indicating that the authentication in response to the authentication request has failed and that the authentication state has changed to the locked state (ST31).

According to the process as described above, in the information processing system according to the first embodiment, the security device specifies the authentication process of the content in accordance with the content of the authentication request from the mobile terminal that executes the mDL, and notifies the mobile terminal of the result of the authentication process in accordance with the content of the authentication request as the authentication result. As a result, according to the information processing system of the first embodiment, it is possible to provide the information of the mDL based on the authentication result in the security device that is a device different from the mobile terminal that executes the mDL, and to improve security for the information of the mDL.

Furthermore, according to the operation example described above, in the information processing system according to the first embodiment, the security device specifies the content of the authentication process to be executed in accordance with the clocking information measured by the internal clock in response to the authentication request from the mobile terminal that executes the mDL. As a result, the security device can execute the authentication process by the authentication method required with the lapse of time or the like by the security device itself without depending on an external device, and maintain the strong security.

Next, an unlock process for unlocking the locked state of the authentication state in the security device 2 according to the first embodiment will be described.

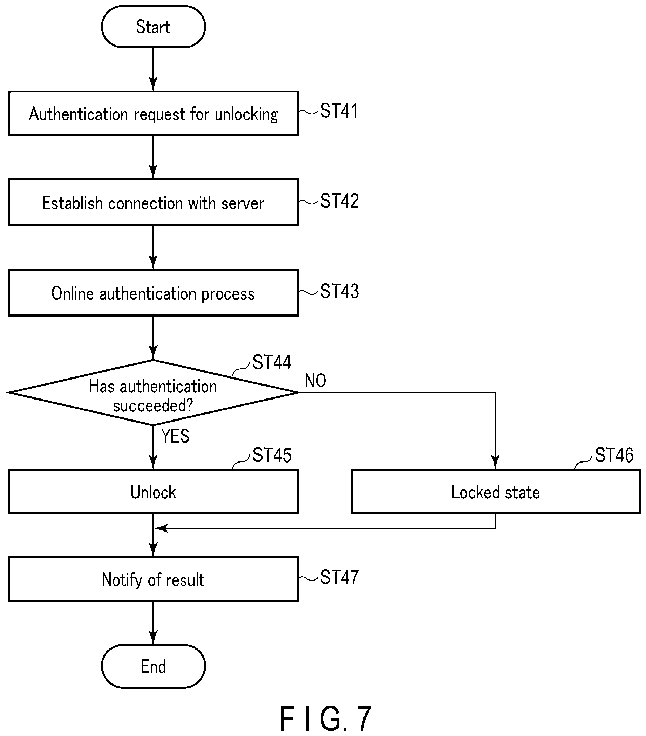

FIG. 7 is a flowchart for explaining an unlock process for bringing the authentication locked state into the unlocked state in the security device 2 according to the first embodiment.

According to the operation example illustrated in FIG. 6 described above, the security device 2 sets the authentication state to the locked state if the authentication process fails during the predetermined retry. In the locked state, the mDL of the mobile terminal 3 becomes unusable unless the security device 2 releases the locked state by the unlock process.

The security device 2 in the information management system according to the first embodiment has a function of executing an unlock process of releasing a locked state by a predetermined procedure. In the operation example illustrated in FIG. 7, it is assumed that the security device 2 can release the locked state if online authentication by cooperation with the server 4 succeeds.

First, the processor 11 of the security device 2 acquires an authentication request for unlocking (unlock request) from the mobile terminal 3 communicatively connected via the interface 16 (ST41).

Upon receiving the unlock request, the processor 11 establishes communication connection with the server 4 in order to perform online authentication as a predetermined procedure for releasing the locked state (ST42). When the communication connection with the server 4 is established, the processor 11 executes online authentication (ST43). As the online authentication, for example, authentication based on the PKI as described above using a secret key held by the security device 2 and a public key held by the server 4 can be applied.

If the online authentication succeeds (ST44, YES), the processor 11 unlocks the locked state of the authentication state for the mobile terminal 3 or the mDL of the mobile terminal 3 (ST45) . If the locked state is released as the online authentication succeeds, the processor 11 transmits a processing result indicating that the locked state of the authentication state is released to the mobile terminal 3 (ST47).

If the online authentication fails (ST44, NO), the processor 11 maintains the locked state of the authentication state with respect to the mobile terminal 3 or the mDL of the mobile terminal 3 (ST46), and transmits a processing result indicating that the authentication state remains in the locked state to the mobile terminal 3(ST47).

According to the above process, the security device according to the first embodiment releases the locked state of the authentication on the mobile terminal or the mDL by a predetermined procedure such as online authentication with the server. As a result, even if the authentication state is locked due to various factors including expiration in the security device, the locked state by a predetermined procedure can be released, and stable operation can be performed while security is maintained.

### (Second Embodiment)

Hereinafter, a second embodiment will be described with reference to the drawings.

First, an information management system 201 including a security device 202 according to the second embodiment will be described.

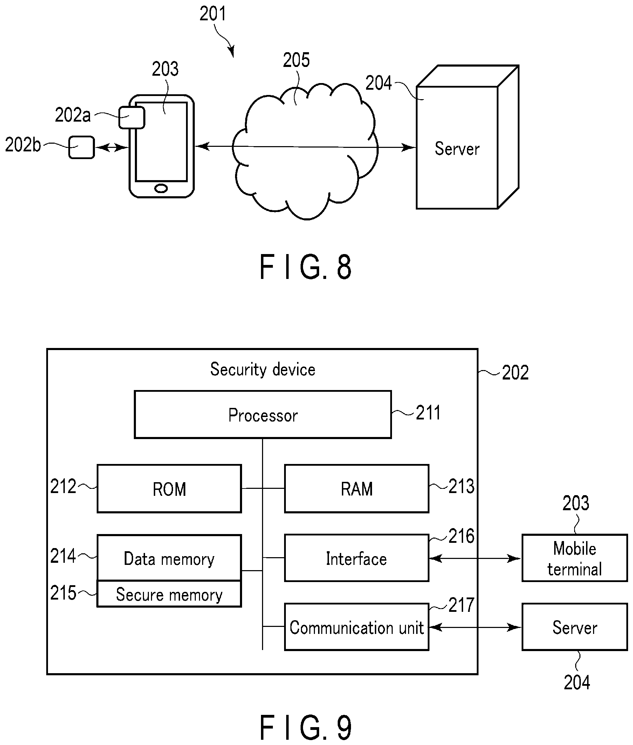

FIG. 8 is a diagram schematically illustrating a configuration example of the information management system 201 including the security device 202 according to the second embodiment.

In the configuration example illustrated in FIG. 8, the information management system 201 includes the security device 202, a mobile terminal 203, and a server 204. The mobile terminal 203 and the server 204 are communicatively connected via a network 205 such as the Internet. Furthermore, the security device 202 and the server 204 may communicate via a network.

The security device 202 is an electronic device including a communication interface connected to the mobile terminal 203 and a secure memory for securely storing information. The security device 202 may be set in the mobile terminal 203 or may be a device that is communicatively connected to the mobile terminal 203. In information management system 201, a plurality of security devices may be connected to the mobile terminal 203.

Examples of the security device 202 set in the mobile terminal 203 include a subscriber identification module (SIM) card, an embedded SIM (sSIM), a memory card, and the like. Furthermore, examples of the security device 202 communicatively connected to the mobile terminal 203 include a wearable device such as a smartwatch, an IC card, an external security device, and the like.

The mobile terminal 203 is an information processing device carried by the user. The mobile terminal 203 is, for example, a smartphone, a mobile phone, a tablet PC, or the like. The mobile terminal 203 includes a display unit, an input unit, and the like as a user interface, and has a function of connecting to the security device 202, a function of communicating with the server 204 via the network 205, and the like.

The mobile terminal 203 is loaded with an application program (hereinafter, also referred to as an app.) for displaying various types of information such as certificate information including personal information indicated by an identification card. In the second embodiment, the mobile terminal 203 is loaded with an app. for realizing a mobile driver's license (hereinafter, also referred to as an mDL.) that can be used as a driver's license which is an example of the identification card. In addition, the mobile terminal 203 is operated by the user himself or herself, and displays as functions of the mobile driver's license, on the display unit, various types of information certified by the driver's license.

The server 204 has a function of communicating with the security device 202 and the mobile terminal 203. Furthermore, the server 204 has a function of communicating with the security device 202. The server 204 may have a function of communicating with the security device 202 via the mobile terminal 203, have a function of communicating with the security device 202 via the network 205 without via the mobile terminal 203, or have both functions.

The server 204 has a database that holds license card information displayed as a function of a mobile driver's license by the mobile terminal 203. The server 204 acquires, from the mobile terminal 203, information (storage location information) indicating the storage location of a secret key for the mobile driver's license installed in the mobile terminal 203 of each user. The server 204 acquires a secret key from a storage location such as the security device 202 indicating the storage location information acquired from the mobile terminal 203, and performs control to display the license card information of each user on the mobile terminal 203 using the acquired secret key.

Next, a configuration of the security device 202 in the information management system 201 according to the second embodiment will be described.

FIG. 9 is a block diagram illustrating a configuration example of a control system in the security device 202 according to the second embodiment.

In the configuration example illustrated in FIG. 9, the security device 202 includes a processor 211, a ROM 212, a RAM 213, a data memory 214, a secure memory 215, an interface (I/F) 216, a communication unit 217, and the like.

The processor 211 includes a circuit that executes various processes. The processor 211 is, for example, a central processing unit (CPU). The processor 211 controls the entire security device 202. The processor 211 implements various processing functions by executing programs stored in the ROM 212 or the data memory 214. However, some or all of various functions executed by the processor 211 described later may be implemented by a hardware circuit.

The ROM 212 is a non-volatile memory that functions as a program memory. The ROM 212 stores a control program, control data, -and the like in advance. The ROM 212 is incorporated in the housing of the security device 202 in a state where the control program, the control data, and the like are stored at the manufacturing stage. The control program and the control data stored in the ROM 212 are incorporated in advance in accordance with the specification of the security device 202 or the like.

The RAM 213 is a volatile memory that functions as a working memory. The RAM 213 also functions as a buffer that temporarily stores data and the like being processed by the processor 211. For example, the RAM 213 functions as a communication buffer that temporarily stores data to be transmitted to and received from the server 204 via the communication unit 217.

The data memory 214 is a non-volatile memory capable of writing and rewriting data. The data memory 214 includes, for example, an Electrically Erasable Programmable Read Only Memory (EEPROM (registered trademark)) and the like. In the data memory 214, programs and various data corresponding to the operation application of the security device 202 are written. In a data memory 24, a program file, a data file, or the like is defined, and a control program and various data are written in these files.

The secure memory 215 is a memory having tamper resistance capable of securely storing data. The secure memory 215 stores a secret key corresponding to the mobile driver's license of the connected mobile terminal 203.

The interface 216 is an interface for connection with the mobile terminal 203. The interface 216 may be connected in physical contact with the interface included in the mobile terminal 203, or may be communicatively connected to the mobile terminal 203. For example, the interface for communicable connection with the mobile terminal 203 is an interface for short-range wireless communication such as Bluetooth (registered trademark), contactless communication for contactless communication with a contactless IC card, or wireless communication such as Wi-Fi (registered trademark).

In addition, the communication unit 217 is a communication interface for communicating with an external device. The communication unit 217 communicates with the server 204 via the network 205. The communication unit 217 may communicate via a mobile phone communication network such as 3G, LTE (registered trademark), or 5G, or may communicate with the server 204 via a wireless LAN such as Wi-Fi. Note that, in a case where the security device 202 communicates with the server 204 via the mobile terminal 203, the communication unit 217 may be omitted as the configuration of the security device 202.

Next, a configuration of the mobile terminal 203 in the information management system 201 according to the second embodiment will be described.

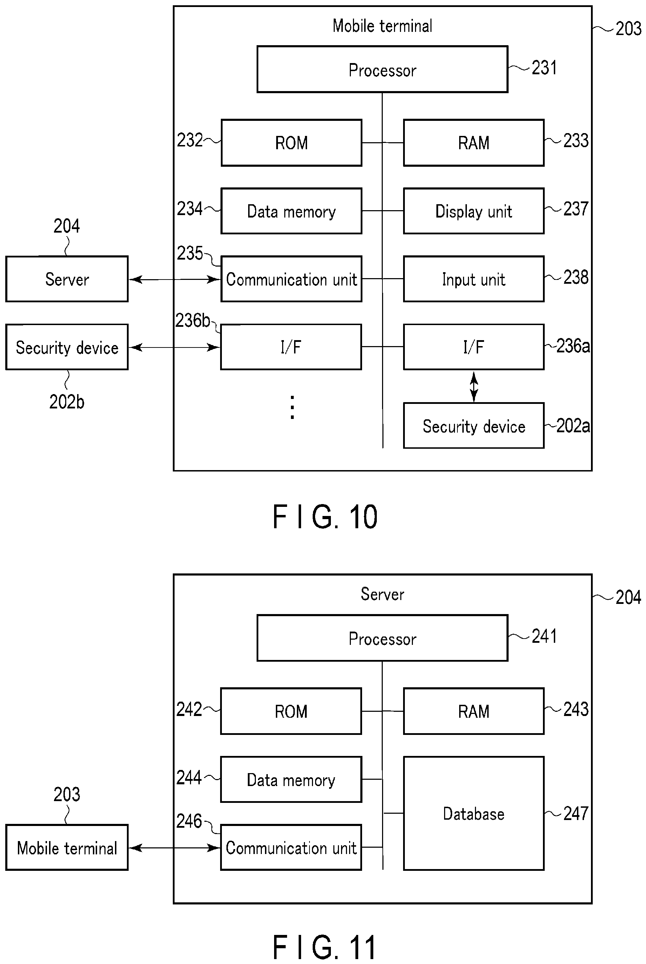

FIG. 10 is a block diagram illustrating a configuration example of the mobile terminal 203 in the information management system 201 according to the second embodiment.

In the configuration example illustrated in FIG. 10, the mobile terminal 203 includes a processor 231, a ROM 232, a RAM 233, a data memory 234, a communication unit 235, an interface (I/F) 236, a display unit 237, an input unit 238, and the like.

The processor 231 executes various processes by executing a program. The processor 231 is, for example, a central processing unit (CPU). The processor 231 is connected to each unit in the mobile terminal 203 via a system bus, and transmits and receives data to and from each unit. The processor 231 executes operations such as control and data processing in the mobile terminal 203 in cooperation with the ROM 232 and the RAM 233. For example, the processor 231 implements various processing functions by executing application programs stored in the ROM 232 or the data memory 234. However, some or all of various functions executed by the processor 231 described later may be implemented by a hardware circuit.

The read only memory (ROM) 232 is a non-volatile memory that stores programs and control data for realizing basic operations of the mobile terminal 203. For example, the ROM 232 stores a program that manages basic operations such as an operating system (OS). In addition, the ROM 232 may store an application program or the like for realizing the function included in the mobile terminal 203. The ROM 232 may be configured by a rewritable non-volatile memory. For example, the rewritable ROM 232 is realized by an electrically erasable programmable ROM (EEPROM), a flash ROM, or the like.

A random access memory (RAM) 233 is a volatile memory that temporarily stores data. The RAM 233 functions as a working memory when the processor 231 executes a program.

The data memory 234 is a storage unit that stores various data. The data memory 234 is configured by a non-volatile memory capable of rewriting data. For example, as the data memory 234, a semiconductor element memory such as a flash ROM or a solid state drive (SSD), or a storage device such as a hard disc drive (HDD) is used. The data memory 234 stores an application program, operation setting values, personal information, and the like. The data memory 234 may store an OS program.

The communication unit 235 is a communication interface for communicating with an external device. The communication unit 235 communicates with the server 204 via an interface. The communication unit 235 may communicate via a mobile phone communication network (mobile communication) such as 3G, LTE, or 5G, or may communicate with the server 204 via a wireless LAN such as Wi-Fi.

The interfaces (I/F) 236 (236a, 236b, ...) are security device interfaces for communication connection with the security device 202. The interface 236 is configured to be connectable with at least one security device 202. FIG. 10 illustrates that the interfaces 236 includes a first interface 236a and a second interface 236b. Each interface 236 is configured by an interface corresponding to each of the various security devices 202.

For example, the first interface 236a is an interface corresponding to a security device (for example, SIM card, eSIM, memory card, and the like) 202a set at a predetermined position of the mobile terminal 203 (attached to the mobile terminal 203). The second interface 236b is an interface corresponding to the security device (for example, a wearable device such as a smartwatch, an IC card, an external security device, or the like) 202b as an external device communicatively connected to the mobile terminal 203. Examples of the second interface 236b include an interface that performs wireless communication such as Bluetooth, an IC card reader/writer, and the like.

The display unit 237 is a display apparatus (display device) such as a liquid crystal panel. The input unit 238 is an input device that inputs an operation instruction to the mobile terminal 203. The input unit 238 includes, for example, a touch panel. The display unit 237 and the input unit 238 may be configured by a display device with a touch panel (hereinafter, referred to as a touch screen.). Furthermore, the input unit 238 may include an operation key including a button switch, a touch sensor that detects a touch of the operator's finger based on a change in capacitance, and the like.

Next, a configuration of the server 204 in the information management system 201 according to the second embodiment will be described.

FIG. 11 is a block diagram illustrating a configuration example of the server 204 in the information management system 201 according to the second embodiment.

As illustrated in FIG. 11, the server 204 includes a processor 241, a ROM 242, a RAM 243, a data memory 244, a communication unit 246, and a database 247.

The processor 241 executes various processes by executing a program. The processor 241 is, for example, a central processing unit (CPU). The processor 241 is connected to each unit in the server 204 via a system bus, and transmits and receives data to and from each unit. The processor 241 executes operations such as control and data processing in the server 204 in cooperation with the ROM 242 and the RAM 243.

The read only memory (ROM) 242 is a non-volatile memory that stores programs and control data for realizing basic operations of the server 204.

A random access memory (RAM) 243 is a volatile memory that temporarily stores data. The RAM 243 functions as a working memory when the processor 241 executes a program.

The data memory 244 is a storage unit that stores various data. The data memory 244 is configured by a non-volatile memory capable of rewriting data. For example, the data memory 244 stores an OS program, an application program, operation setting information, and the like.

The communication unit 246 is a communication interface for communicating with an external device. The communication unit 246 may perform wireless communication or may perform wired communication. In the second embodiment, it is sufficient that the communication unit 246 communicates with the security device 202 and the mobile terminal 203 held by the user via a wide area network such as the Internet.

The database 247 stores license card information that can be displayed on the mobile terminal 203 as mobile driver's license information. For example, when an app. as a mobile driver's license is installed on the mobile terminal 203 of the user, the license card information displayed by the mobile driver's license is registered in the database 247.

Next, an operation for the mobile terminal 203 to display license card information as a mobile driver's license in the information management system 201 according to the second embodiment will be described.

First, an operation example of the storage setting of the secret key corresponding to the mobile driver's license in the mobile terminal 203 in the information management system 201 according to the second embodiment will be described.

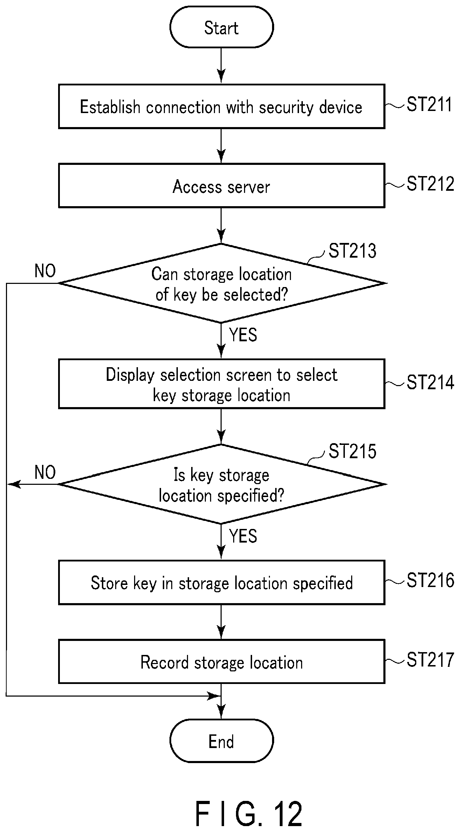

FIG. 12 is a flowchart for explaining an operation example of the storage setting of the secret key corresponding to the mobile driver's license in the mobile terminal 203 of the information management system 201 according to the second embodiment.

First, the user performs an operation to connect the security device 202 to the interface 236 of the mobile terminal 203. The processor 231 establishes a connection with the security device 202 via the interface 236 in response to a user operation or the like (ST211). For example, the user sets the security device 202a such as a SIM card at a predetermined position in the mobile terminal 203. When the security device 202a set at the predetermined position comes into contact with the contact portion of the interface 236a, the processor 231 establishes a communication state with the security device 202a via the interface 236a.

In addition, in a case where the security device 202b as an external device is connected, the processor 231 attempts communication connection with the security device 202b by the interface 236b in response to a user operation or the like, thereby establishing a communication state with the security device 202b via the interface 236b.

If the security device 202 is connected to the interface 236, the processor 231 accesses the server 204 by the communication unit 235 (ST212). Further, the processor 231 determines whether the storage location of the key can be selected from the security device 202 connected to the interface 236 (ST213). For example, the processor 231 determines whether or not the security device 202 connected to the interface 236 can be selected as a key storage location depending on whether or not the security device 202 includes a secure memory capable of storing a secret key.

If the storage location of the key cannot be selected (ST213, NO), the processor 231 ends the secret key storage setting process.

If the key storage location can be selected (ST213, YES), the processor 231 displays a selection screen for allowing the user to select the key storage location on the display unit 237 (ST214). For example, the processor 231 displays a list of the security devices 202 that can be key storage locations on the selection screen. The user uses the input unit 238 to select and instruct any of the security devices 202 displayed as options on the selection screen displayed on the display unit 237 as a storage location for storing the secret key.

For example, when the SIM card as the first security device 202a is connected to the interface 236a and the smartwatch as the second security device 202b is connected to the interface 236b, the processor 231 displays, on the display unit 237, a selection screen for selecting either the SIM card or the smartwatch as the key storage location. In this case, the user selects the SIM card or the smartwatch as the storage location of the secret key by using the input unit 238.

If the key storage location is selected from the options displayed on the selection screen (ST215, YES), the processor 231 stores the secret key in the security device 202 as the storage location selected by the user (ST216). For example, the processor 231 writes the secret key corresponding to the mobile driver's license installed in the mobile terminal 203 in the secure memory of the selected security device 202.

When storing the secret key in the storage location selected by the user, the processor 231 generates storage location information indicating the security device 202 as the storage location in which the secret key is stored, and stores the generated storage location information in the data memory 234 (ST217).

According to the process as described above, the mobile terminal in the information processing system according to the second embodiment can register the security device selected by the user as the storage location of the secret key. The mobile terminal can generate storage location information indicating a security device as a storage location of a secret key specified by the user, and store the biometric storage location information in the memory.

Next, an operation of display process of displaying the license information on the mobile terminal 203 in the information management system 201 according to the second embodiment will be described.

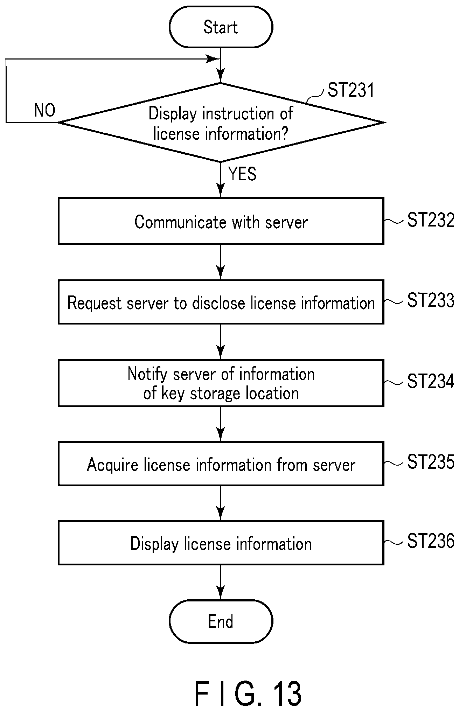

FIG. 13 is a flowchart for explaining an operation example of display process of license information by the mobile terminal 203 in the information management system 201 according to the second embodiment.

The user activates the app. of the mobile driver's license on the mobile terminal 203 and specifies license information desired to be displayed using the input unit 238.The processor 231 activates the app. of the mobile driver's license in response to the user operation, and receives a display instruction of the license information specified using the input unit 238.

If the display instruction of the license information is input by the input unit 238 (ST231, YES), the processor 231 of the mobile terminal 203 communicates with the server 204 by the communication unit 235 (ST232). After the communication with the server 204 is established, the processor 231 requests the server 204 to disclose the license information instructed to be displayed using the input unit 238 (ST233).

After transmitting the disclosure request of the license information to the server 204, the processor 231 of the mobile terminal 203 transmits storage location information indicating the storage location (security device) of the key (secret key) to the server 204 in response to the request from the server 204 (ST234). The storage location information is information registered by the storage setting as described above, and is information indicating the storage location of the secret key corresponding to the mobile driver's license of the user.

After transmitting the storage location information indicating the storage location of the key, the processor 231 acquires license information to be displayed on the display unit 237 requesting disclosure from the server 204 (ST235). When acquiring the license information from the server 204, the processor 231 displays the acquired license information on the display unit 237 (ST236).

According to the above process, in the information processing system according to the second embodiment, the mobile terminal transmits the license information disclosure request to the server in response to the instruction to display the license information input by the input unit. The mobile terminal notifies the server of storage location information indicating the storage location of the secret key corresponding to the mobile driver's license in response to the request from the server that has transmitted the license information disclosure request. After treating the storage location information, the mobile terminal displays the license information obtained from the server on the display unit. As a result, the secret key for using the mobile driver's license can be stored in a security device having a secure memory different from the mobile terminal, and the storage location of the secret key can be notified to the server.

Next, an operation of the server 204 in the information management system 201 according to the second embodiment will be described.

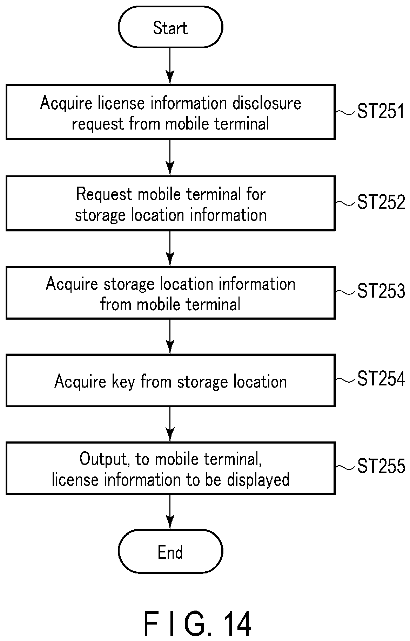

FIG. 14 is a flowchart for explaining an operation example of the server 204 in the information management system 201 according to the second embodiment.

The mobile terminal 203 requests the server 204 for license information to be displayed as a mobile driver's license in response to the user operation by an operation as illustrated in FIG. 13. The server 204 communicates with the mobile terminal 203 via the network 205 to the communication unit 246. The processor 241 in server 204 acquires a license information disclosure request from the mobile terminal 203 via the communication unit 246 (ST251).

When acquiring the disclosure request of the license information of the mobile terminal 203, the processor 241 performs processing of acquiring the secret key corresponding to the mobile driver's license installed in the mobile terminal 203 in order to display the license information of the user on the mobile terminal 203. The processor 241 of the server 204 requests the mobile terminal 203 for the storage location information to acquire a secret key (ST252). After requesting the storage location information, the processor 241 of the server 204 acquires the storage location information from the mobile terminal 203 by the communication unit 246 (ST253).

When acquiring the storage location information, the processor 241 acquires the secret key from the storage location indicated by the acquired storage location information (ST254). Here, if the security device 202 as the storage location has a function of communicating with the server 204 without passing through the mobile terminal 203, the processor 241 acquires the secret key from the security device 202 communicating by the communication unit 246 without passing through the mobile terminal 203. In addition, if the security device 202 as a storage location communicates with the server 204 via the mobile terminal 203, the processor 241 acquires the secret key from the security device 202 as a storage location via the mobile terminal 203.

When acquiring the secret key, the processor 241 outputs, to the mobile terminal 203, license information of the user to be displayed on the display unit 237 of the mobile terminal 203 using the acquired secret key (ST255).

According to the above process, in the information processing system according to the second embodiment, the server acquires the storage location information indicating the storage location of the secret key from the mobile terminal when receiving the disclosure request of the license information from the mobile terminal, and displays the license information of the user on the mobile terminal using the secret key acquired from the storage location indicated by the storage location information. As a result, according to the second embodiment, the information management system can display the license information of the user on the mobile terminal by using the secret key for a security device having the secure memory specified by a user different from the user of the mobile terminal. As a result, the secret key can be securely managed, and security of information provided by using the secret key can be improved.

The functions described in the above-described embodiments can be implemented not only by using hardware but also by causing a computer to read a program describing the functions by using software. Furthermore, each function may be configured by appropriately selecting either software or hardware.

Although some embodiments of the present invention have been described, these embodiments have been presented as examples, and are not intended to limit the scope of the invention. These novel embodiments can be implemented in various other forms, and various omissions, substitutions, and changes can be made without departing from the gist of the invention. These embodiments and modifications thereof are included in the scope and gist of the invention, and are included in the invention described in the claims and the equivalent scope thereof.

## Claims

1. The security device comprising:
an interface configured to communicate with a mobile terminal comprising a function of disclosing information;
a secure memory configured to store information to be used for authentication; and
a processor configured to receive an authentication request associated with an instruction to disclose information to be subjected to security management in the mobile terminal by the interface, specify an authentication process to be executed by using information stored in the secure memory in accordance with content of the authentication request, and notify the mobile terminal of an authentication result of execution of the specified authentication process.

2. The security device according to claim 1, further comprising:
a main body comprising the interface, the secure memory, and the processor; and
an attachment portion configured to attach the main body to a user.

3. The security device according to any one of claims 1 or 2, comprising
a biometric sensor configured to acquire biometric information,
wherein the secure memory stores authentication information including biometric information, and
the processor specifies an authentication process to be executed in accordance with content of the authentication request from among a plurality of authentication processes including biometric authentication using biometric information stored in the secure memory.

4. The security device according to any one of claims 1 to 3, comprising
a communication unit configured to communicate with a server,
wherein the secure memory stores a key corresponding to a key held by the server, and
the processor specifies an authentication process to be executed in accordance with content of the authentication request from among a plurality of authentication processes including online authentication using the key stored in the secure memory and the key held by the server.

5. The security device according to any one of claims 1 to 4,
wherein the processor specifies an authentication level based on content of the authentication request, and specifies an authentication process in accordance with the authentication level.

6. The security device according to any one of claims 1 to 5, comprising
a clock configured to measure a date and time,
wherein the processor specifies an authentication process to be executed based on the date and time measured by the clock.

7. The security device according to claim 4, further comprising:
a clock configured to measure a date and time; and
a memory configured to store a date and time when the online authentication succeeds,
wherein the processor specifies an authentication process including the online authentication as an authentication process to be executed in a case where time elapsed since previous online authentication based on the date and time measured by the clock and information stored in the memory succeeded exceeds a reference value.

8. The security device according to claim 4, further comprising:
a clock configured to measure a date and time; and
a memory configured to store information indicating the number of times of authentication processes performed after the online authentication succeeded,
wherein the processor specifies an authentication process including the online authentication as an authentication process to be executed in a case where the number of times of executing authentication process performed since previous online authentication based on information stored in the memory succeeded exceeds a reference value.

9. An information management system comprising
a mobile terminal and a security device,
the mobile terminal comprising:
a security device interface configured to communicate with the security device;
an input unit for instructing disclosure of information by a user; and
a first processor configured to: if authentication on the security device is required to disclose information indicated by the input unit, send an authentication request to the security device; and if authentication on the security device succeeds, disclose the information, and
the security device comprising:
an interface configured to communicate with the mobile terminal;
a secure memory configured to store information to be used for authentication; and
a second processor configured to: if the mobile terminal receives an authentication request for starting information through the interface, specify an authentication process to be executed by using information stored in the secure memory in accordance with content of the authentication request; and notify a mobile terminal of an authentication result of execution of the specified authentication process.

10. The information management system according to claim 9, comprising
a communication unit configured to communicate with a server,
wherein the secure memory stores a key corresponding to a key held by the server, and
the second processor specifies an authentication process to be executed in accordance with content of the authentication request from among a plurality of authentication processes including online authentication using the key stored in the secure memory and the key held by the server.

11. The information management system according to claim 9 or 10, comprising
a clock configured to measure a date and time,
wherein the second processor specifies content of an authentication process to be executed based on the date and time measured by the clock.

12. The information management system according to claim 10, comprising:
a clock configured to measure a date and time; and
a memory configured to store a date and time when the online authentication succeeds,
wherein the second processor specifies an authentication process including the online authentication as an authentication process to be executed in a case where time elapsed since previous online authentication based on the date and time measuring the clock and information stored in the memory succeeded exceeds a reference value.

13. The information management system according to claim 10, comprising:
a clock configured to measure a date and time; and
a memory configured to store information indicating the number of times of authentication processes performed after the online authentication succeeded,
wherein the second processor specifies an authentication process including the online authentication as an authentication process to be executed in a case where the number of times of authentication processes performed since previous online authentication based on information stored in the memory succeeded exceeds a reference value.

14. An information management system comprising a mobile terminal and a server,
the mobile terminal comprising:
a memory;
a display device;
an input device configured to receive a user operation;
at least one interface configured to connect a security device;
a first communication unit configured to communicate with the server;
a first processor configured to:
display, on the display device, a selection screen for allowing a user to select a storage location of a secret key from a security device connected to the interface;
store, in the memory, storage location information indicating a security device specified by a user as a storage location of a secret key by using the input device when the selection screen is displayed; and
transmit the storage location information to the server communicating with the first communication unit; and
display, on the display device, information from the server that has transmitted the storage location information, and
the server comprising:
a second communication unit configured to communicate with the mobile terminal; and
a second processor configured to acquire the storage location information from the mobile terminal with the second communication unit, and output, to the mobile terminal, information regarding the user to be displayed on a display device of the mobile terminal by using a secret key acquired from a security device indicated by the storage location information.

15. The information management system according to claim 14,
wherein the interface of the mobile terminal includes an interface for connecting to a security device to be attached to the mobile terminal.

16. The information management system according to claim 14,
wherein the interface of the mobile terminal includes an interface that communicates with a security device as an external device of the mobile terminal.

17. The information management system according to claim 14,
wherein the server comprises a database that holds license information of the user as information regarding the user to be displayed on a display device of the mobile terminal using the secret key.

18. An information management program, in a mobile terminal comprising a memory, a display device, an input device, at least one interface configured to connect a security device, a communication unit configured to communicate with a server, and a processor,
the information management program causing the processor to execute to:
display, on the display device, a selection screen for allowing a user to select a storage location of a secret key from a security device connected to the interface;
store, in the memory, storage location information indicating a security device specified by a user as a storage location of a secret key by using the input device when the selection screen is displayed;
cause the communication unit to transmit storage location information to the server; and
display, on the display device, information from the server that has transmitted the storage location information.

19. The information management program according to claim 18,
wherein the interface includes an interface for connecting to a security device to be attached to the mobile terminal.

20. The information management program according to claim 18,
wherein the interface includes an interface that communicates with a security device as an external device of the mobile terminal.
